# FASCICULE DE BREVET EUROPEEN

(11) **EP 3 650 712 B1**
(45) Date de publication et mention de la délivrance du brevet: **01.03.2023**
(21) Numéro de dépôt: 19206826.0
(22) Date de dépôt: 04.11.2019
(51) Int. Cl.: F16B 5/06, F16B 21/08

(54) **DISPOSITIF D'ASSEMBLAGE DE DEUX SUPPORTS SUPERPOSÉS ASSURANT UNE LIAISON ENTRE LES SUPPORTS AVEC UNE APTITUDE DE DÉPLACEMENT RELATIF ET D'AMORTISSEMENT**
VORRICHTUNG ZUM ZUSAMMENBAU VON ZWEI ÜBEREINANDER POSITIONIERTEN HALTERUNGEN, DIE EINE VERBINDUNG ZWISCHEN DIESEN BEIDEN HALTERUNGEN MIT RELATIVER VERSCHIEBE- UND DÄMPFUNGSFÄHIGKEIT SICHERSTELLT
DEVICE FOR ASSEMBLING TWO STACKED SUPPORTS PROVIDING A LINK BETWEEN THE SUPPORTS WITH AN ABILITY FOR RELATIVE MOVEMENT AND DAMPING

(30) Priorité: 07.11.2018 FR 1860251
(43) Date de publication de la demande: 13.05.2020
(73) Titulaire: A. Raymond et Cie, 38000 Grenoble (FR)
(72) Inventeur: OULES, Anthony, 38380 Saint Laurent du Pont (FR); ALBARAN, Jean-François, 38760 Varces (FR)
(74) Mandataire: Germain Maureau

(56) Documents cités:
- DE-A1- 3 812 093
- DE-A1-102012 007 971
- GB-A- 1 517 823
- JP-A- 2016 001 041
- US-B2- 7 328 489

## Description

### DOMAINE TECHNIQUE

La présente invention concerne généralement un dispositif d'assemblage destiné à assembler un premier support et un deuxième support entre eux dans une configuration où les deux supports sont superposés au moins localement.

Autrement dit, le dispositif d'assemblage est destiné à être utilisé en coopération d'une part avec un premier support dont une ouverture est destinée à être obturée par le dispositif d'assemblage, d'autre part avec un deuxième support distinct du premier support et destiné à être maintenu par le dispositif d'assemblage dans une configuration où le premier support et le deuxième support sont situés l'un au-dessus de l'autre au moins au niveau du dispositif d'assemblage.

De manière non limitative concernant les domaines d'applications possibles et variés de l'invention, le dispositif d'assemblage peut trouver une application notamment dans le domaine automobile, par exemple dans le cas particulier où le premier support est une paroi structurelle, typiquement une tôle métallique, séparant un compartiment moteur d'un véhicule automobile par rapport à l'habitacle du véhicule automobile, tandis que le deuxième support peut être un panneau isolant, pour assurer une isolation phonique et thermique entre le compartiment moteur et l'habitacle.

### ETAT DE LA TECHNIQUE ANTERIEURE

Dans de nombreux domaines, par exemple dans le domaine des véhicules automobiles, il est nécessaire d'assembler deux supports entre eux dans une zone où les deux supports sont superposés au moins localement. Ces deux supports peuvent être destinés à servir d'interface et de séparation entre deux environnements distincts. Il peut également être nécessaire parfois d'isoler ces deux environnements l'un de l'autre, que ce soit au sujet d'une isolation thermique pour s'opposer à des transferts de chaleur d'un environnement à l'autre ou au sujet d'une isolation phonique pour éviter la transmission de bruits et de sons d'un environnement à l'autre. Parfois, les deux types d'isolation sont recherchés simultanément en fonction du cahier des charges et des besoins. Différents dispositifs d'assemblage sont connus de DE3812093A, DE102012007971A1, GB1517823A, US7328489B2, JP2016001041A.

A titre d'exemple, il existe généralement un besoin de fournir une solution dans le cas particulier où les deux supports ont pour fonction de séparer et d'isoler thermiquement et de manière phonique le compartiment moteur d'un véhicule automobile, où beaucoup de bruits et de chaleur sont générés, par rapport à l'habitacle du véhicule dans lequel il est classiquement recherché au contraire un confort pour les occupants. A cet effet, il est généralement nécessaire de s'opposer au transfert de chaleur et de bruits en provenance du compartiment moteur vers l'habitacle.

Le premier support peut typiquement être une paroi configurée pour remplir un rôle de structure, par exemple sous la forme d'une tôle métallique, et le deuxième support peut se présenter sous la forme d'un panneau configuré pour assurer les fonctions d'isolation.

Que ce soit dans le domaine des véhicules automobiles ou de nombreux autres domaines d'application, les deux supports peuvent être assemblés par l'intermédiaire d'une pluralité de dispositifs d'assemblage garantissant que les deux supports soient superposés l'un au-dessus de l'autre au moins localement, c'est-à-dire au niveau de chaque dispositif d'assemblage.

Il est connu d'avoir recours à une solution où chaque dispositif d'assemblage comprend une première partie apte à être fixée dans une ouverture correspondante délimitée par le premier support après insertion de cette première partie dans l'ouverture. En complément de la fonction de fixation proprement dite, la première partie peut assurer une fonction d'obturation étanche de l'ouverture du premier support. Chaque dispositif d'assemblage peut également comporter une deuxième partie, solidaire de la première partie ou rapportée sur celle-ci, et apte à maintenir le deuxième support par l'intermédiaire d'éléments d'appui destinés à venir en appui contre le deuxième support pour former une butée pour le deuxième support dans un sens tendant à s'opposer à un éloignement du deuxième support par rapport au premier support. La combinaison de la fixation du premier support par la première partie et du maintien du deuxième support par la deuxième partie permet de garantir au final l'assemblage recherché des deux supports.

Ces solutions connues d'assemblage ne donnent malheureusement pas encore une entière satisfaction. En effet, de tels dispositifs d'assemblage ne permettent pas de traiter la transmission des vibrations mécaniques d'un environnement à l'autre au travers des deux supports ainsi assemblés. Or, de telles vibrations mécaniques peuvent être nuisibles ou désagréables. Par exemple, dans le cas d'un véhicule automobile, la transmission de vibrations mécaniques en provenance du compartiment moteur vers l'habitacle peut être préjudiciable au confort des occupants de l'habitacle. La transmission des vibrations mécaniques peut être réduite, lorsque cela est nécessaire, par l'intermédiaire de dispositifs amortisseurs impliquant généralement la fourniture et la mise en place de pièces supplémentaires. La présence simultanée d'une part d'un assemblage des deux supports avec une bonne rigidité et une bonne qualité de l'isolation, et d'autre part d'une transmission limitée ou réduite des vibrations mécaniques d'un environnement à l'autre, s'obtient donc actuellement au prix de solutions complexes et onéreuses, tant en terme de fabrication que de mise en place.

Ces problématiques, bien que particulièrement importantes dans le contexte particulier du domaine des véhicules automobiles où les deux environnements délimités et isolés par les deux supports peuvent correspondre à un compartiment moteur et à un habitacle d'un véhicule automobile, peuvent concerner de nombreux autres domaines d'application. Le dispositif d'assemblage qui sera décrit en détails dans la suite de la description permettra de répondre aux problématiques évoquées précédemment dans tous les domaines où il est recherché à la fois d'assembler deux supports, dans une configuration où ils sont superposés au moins localement, pour séparer et isoler deux environnements l'un par rapport à l'autre et de limiter la transmission de vibrations mécaniques d'un environnement à l'autre.

### EXPOSE DE L'INVENTION

La présente invention a pour but de proposer un dispositif d'assemblage destiné à assembler un premier support et un deuxième support entre eux dans une configuration où les supports sont superposés au moins localement, qui réponde aux problématiques listées ci-avant

Notamment, le but de l'invention est de proposer un tel dispositif d'assemblage qui réponde à au moins l'un des objectifs suivants :
- être économique,
- favoriser un montage aisé,
- garantir un assemblage fiable et résistant des deux supports,
- limiter la transmission de vibrations mécaniques d'un environnement délimité et isolé par les deux supports assemblés via le dispositif d'assemblage à l'autre environnement délimité et isolé par ces deux supports.

Ce but peut être atteint grâce à la fourniture d'un dispositif d'assemblage destiné à assembler un premier support et un deuxième support entre eux dans une configuration où les supports sont superposés au moins localement, le dispositif d'assemblage comprenant :
un corps d'obturation s'étendant essentiellement selon un axe principal et configuré de sorte à pouvoir venir se fixer dans une ouverture formée dans le premier support tout en l'obturant, par insertion de tout ou partie du corps d'obturation dans l'ouverture sensiblement parallèlement à l'axe principal,
une entretoise décalée par rapport au corps d'obturation suivant l'axe principal, destinée à traverser l'épaisseur du deuxième support et comprenant des éléments d'appui destinés à venir en appui contre le deuxième support suivant l'axe principal du côté opposé au corps d'obturation pour maintenir en position le deuxième support dans ladite configuration où le premier support et le deuxième support sont situés l'un au-dessus de l'autre suivant l'axe principal au moins au niveau du dispositif d'assemblage,
et un système de liaison reliant mécaniquement le corps d'obturation et l'entretoise et ayant une aptitude à se déformer élastiquement le long de l'axe principal d'une manière conférant une liaison mécanique élastiquement déformable et amortissante entre le corps d'obturation et l'entretoise suivant l'axe principal telle que, sous l'effet d'efforts extérieurs susceptibles d'être appliqués au dispositif d'assemblage par le premier support et par le deuxième support respectivement au niveau du corps d'obturation et de l'entretoise, le corps d'obturation et l'entretoise ont une aptitude à se rapprocher élastiquement l'un de l'autre suivant l'axe principal en jouant un rôle d'amortisseur de vibrations mécaniques,
dans lequel le système de liaison comprend une pluralité de liens individuels distincts les uns des autres, où chaque lien relie mécaniquement le corps d'obturation et l'entretoise et où tout ou partie de chaque lien est déformable élastiquement au moins suivant l'axe principal, chaque lien étant constitué d'une part d'un tenon inférieur et d'un tenon supérieur respectivement raccordés mécaniquement au corps d'obturation et à l'entretoise et s'étendant chacun sensiblement parallèlement à l'axe principal en présentant un décalage l'un par rapport à l'autre transversalement à l'axe principal, d'autre part d'une branche de raccordement reliant mécaniquement le tenon inférieur et le tenon supérieur entre eux et étant inclinée par rapport au plan orthogonal à l'axe principal de sorte à former un angle non nul.

Certains aspects préférés mais non limitatifs du dispositif d'assemblage sont les suivants.

Pour chaque lien du système de liaison, l'angle formé entre la branche de raccordement et le plan orthogonal à l'axe principal est compris entre 10° et 25°, de préférence entre 15° et 20°.

Le nombre de liens est supérieur ou égal à deux et les liens sont répartis autour de l'axe principal, chaque lien étant positionné dans une zone donnée du pourtour de l'entretoise vu dans le plan orthogonal à l'axe principal et dans une zone donnée du pourtour du corps d'obturation vu dans le plan orthogonal à l'axe principal.

Le corps d'obturation comprend au moins une patte d'encliquetage destinée à assurer une fixation par encliquetage entre le corps d'obturation et le premier support et ladite au moins une patte d'encliquetage comprend un ergot de retenue destiné à venir automatiquement s'accrocher sur le contour de l'ouverture formée dans le premier support de manière à conférer l'état assurant la fixation par encliquetage entre le corps d'obturation et le premier support, cet accrochage de l'ergot de retenue résultant automatiquement d'un mouvement d'insertion du corps d'obturation dans l'ouverture suivant une course d'insertion supérieure ou égale à une valeur prédéterminée en dessous de laquelle ledit état n'est pas obtenu.

Le corps d'obturation comprend une tête inférieure venant en saillie transversalement à l'axe principal autour du reste du corps d'obturation et présentant des dimensions extérieures, vues dans un plan orthogonal à l'axe principal, supérieures aux dimensions de la section de l'ouverture formée dans le premier support, la tête inférieure étant destinée à venir en appui contre le premier support suivant l'axe principal pour former une butée pour le premier support le long de l'axe principal dans un sens tendant à s'opposer à un rapprochement du premier support vers l'entretoise suivant l'axe principal.

Le dispositif d'assemblage comprend un joint inférieur d'étanchéité en matière élastomère déformable solidaire de la tête inférieure et agencé pour venir en appui contre le premier support lorsque le corps d'obturation obture l'ouverture formée dans le premier support.

L'entretoise comprend un fût s'étendant suivant l'axe principal, destiné à être à être inséré dans un orifice formé dans le deuxième support par un déplacement du fût sensiblement parallèlement à l'axe principal jusqu'à traverser toute l'épaisseur du deuxième support et les éléments d'appui comprennent une tête supérieure venant en saillie transversalement à l'axe principal autour du fût et présentant des dimensions extérieures, vues dans un plan orthogonal à l'axe principal, supérieures aux dimensions de la section de l'orifice formé dans le deuxième support.

Les éléments d'appui solidaires de l'entretoise comprennent un joint supérieur d'étanchéité en matière élastomère déformable solidaire de la tête supérieure et agencé pour venir en appui contre le deuxième support lorsque le deuxième support est maintenu par les éléments d'appui solidaires de l'entretoise.

Le corps d'obturation, l'entretoise et le système de liaison sont formés dans une pièce unique monobloc.

### BREVE DESCRIPTION DES DESSINS

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :
la figure 1 est une vue de face d'un exemple de dispositif d'assemblage selon l'invention,
la figure 2 représente le dispositif d'assemblage de la figure 1 suivant une vue de face, dans une situation où il assure l'assemblage de premier et deuxième supports entre eux par fixation au premier support et maintien du deuxième support,
les figures 3 et 4 illustrent, respectivement en vue de face et en perspective de dessus, une partie du dispositif d'assemblage des figures 1 et 2,
et la figure 5 montre en détails la zone nommée A et repérée en pointillés sur la figure 3.

### EXPOSE DETAILLE DE MODES DE REALISATION PARTICULIERS

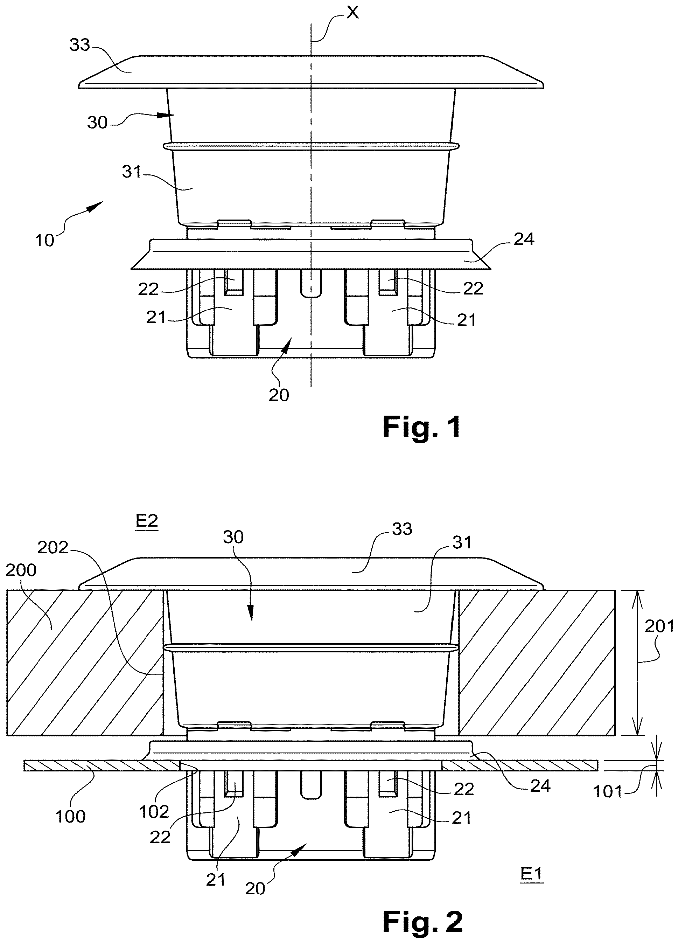

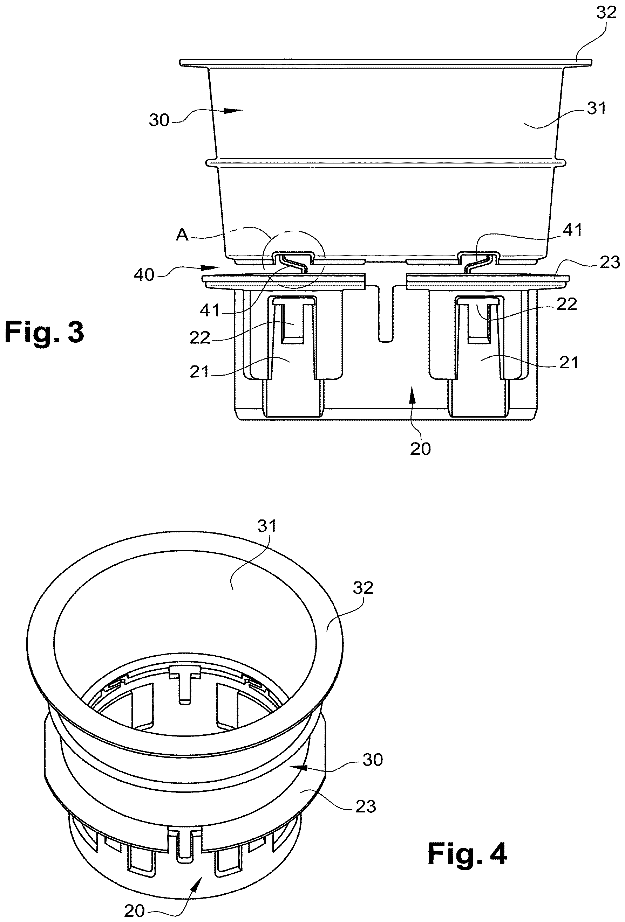

Sur les figures 1 à 5 présentées sommairement ci-avant, il est représenté un exemple de dispositif d'assemblage 10 selon l'invention. Le dispositif d'assemblage 10 permet d'assembler un premier support 100 et un deuxième support 200 entre eux dans une configuration où le premier support 100 et le deuxième support 200 sont superposés au moins localement, c'est-à-dire au moins au niveau du dispositif d'assemblage 10 qui les maintient assemblés l'un à l'autre. En étant assemblés l'un à l'autre au moyen d'un ou plusieurs dispositifs d'assemblage 10, les deux supports 100, 200 ont pour fonction de séparer un premier environnement E1 et un deuxième environnement E2 l'un de l'autre.

La nature du premier support 100 et celle du deuxième support 200 ne sont pas vraiement limitatives en soi et, au contraire, le lecteur pourra envisager d'utiliser le dispositif d'assemblage 10 décrit dans ce document dans le cadre de nombreux domaines d'application.

Dans un domaine particulier d'application particulièrement visé par le dispositif d'assemblage 10, mais une fois encore non limitatif, les deux supports 100, 200 ont pour fonction de séparer et d'isoler thermiquement et de manière phonique un premier environnement E1 correspondant à un compartiment moteur d'un véhicule automobile par rapport à un deuxième environnement E2 correspondant à un habitacle du véhicule automobile. Il est recherché de limiter autant que possible les transferts de chaleur, de bruits et de vibrations mécaniques du premier environnement E1 vers le deuxième environnement E2.

Le premier support 100 peut typiquement se présenter sous la forme d'une paroi configurée pour remplir une fonction structurelle avec des propriétés idoines de rigidité et de résistance mécanique, par exemple sous la forme d'une tôle métallique. Le deuxième support 200 peut se présenter sous la forme d'un panneau isolant ayant des propriétés d'isolation thermique et/ou phonique et présentant par exemple une épaisseur 201 supérieure à l'épaisseur 101 du premier support 100 dans la zone au niveau de laquelle ils sont destinés à être assemblés grâce au dispositif d'assemblage 10.

Le dispositif d'assemblage 10 comprend un corps d'obturation 20, essentiellement sous la forme d'un fût creux, s'étendant essentiellement selon un axe principal X et configuré de sorte à pouvoir venir obturer une ouverture 102 formée dans le premier support 100 par insertion de tout ou partie du corps d'obturation 20 dans l'ouverture 102 par un déplacement du corps d'obturation 20 orienté sensiblement parallèlement à l'axe principal X. La section du corps d'obturation 20 est complémentaire de la forme de l'ouverture, moyennant toutefois l'interposition d'un jeu fonctionnel entre les deux afin de permettre l'insertion du corps d'obturation 20 dans l'ouverture.

Dans ce document, le terme « sensiblement parallèlement » s'interprète comme signifiant soit « exactement parallèle », soit « parallèle à 10° près ».

Le dispositif d'assemblage 10 comprend également une entretoise 30 solidaire indirectement du corps d'obturation 20 comme il le sera expliqué plus loin, et moyennant un décalage entre eux suivant l'axe principal X. Dans la variante représentée, l'entretoise 30 est alignée avec le corps d'obturation 20 le long de l'axe principal X, mais ces dispositions ne sont pas limitatives car il peut être envisagé un décalage entre l'entretoise 30 et le corps d'obturation 20 transversalement à l'axe principal X.

L'entretoise 30 est destinée à traverser toute l'épaisseur 201 du deuxième support 200. L'entretoise 30 permet d'éviter un écrasement local du deuxième support 200 lorsqu'il est maintenu par le dispositif d'assemblage 10 et assemblé au premier support 100. Selon un mode de réalisation non limitatif, l'entretoise 30 comprend un fût 31 creux s'étendant le long de l'axe principal X ou parallèlement à celui-ci. Ce fût 31, qui est par exemple de forme légèrement conique en diminuant de diamètre en s'approchant du corps d'obturation 20, est destiné à être à être inséré dans un orifice 202 formé dans le deuxième support 200 par un déplacement du fût 31 sensiblement parallèlement à l'axe principal X jusqu'à traverser toute l'épaisseur 201 du deuxième support 200.

L'entretoise 30 comprend des éléments d'appui aptes à venir en appui contre le deuxième support 200 suivant l'axe principal X du côté opposé au corps d'obturation 20, pour maintenir le deuxième support 200 dans une configuration (représentée sur la figure 2) où le premier support 100 et le deuxième support 200 sont situés l'un au-dessus de l'autre suivant l'axe principal X au moins au niveau du dispositif d'assemblage 10. Ces éléments d'appui solidaires de l'entretoise 30 sont destinés à venir en appui contre le deuxième support 200 suivant l'axe principal X pour former une butée pour le deuxième support 200 le long de l'axe principal X dans un sens tendant à s'opposer à un éloignement du deuxième support 200 par rapport au corps d'obturation 20 suivant l'axe principal X, et donc à s'opposer à un éloignement du deuxième support 200 par rapport au premier support 100 lui-même fixé au corps d'obturation 20 de la manière qui sera décrite plus loin.

Selon un mode de réalisation tel qu'illustré mais qui reste non limitatif, les éléments d'appui comprennent une tête supérieure 32 s'étendant en saillie transversalement à l'axe principal X autour du fût 31 et présentant des dimensions extérieures, vues dans un plan orthogonal P à l'axe principal X, strictement supérieures aux dimensions de la section de l'orifice 202 formé dans le deuxième support 200.

Par exemple, pour conférer un maintien efficace du deuxième support 200 et une étanchéité efficace tout en facilitant la mise en place en limitant les risques de mauvais positionnement du dispositif d'assemblage 10, facilitant ainsi une mise en place intuitive et potentiellement en aveugle, la tête supérieure 32 peut se présenter sous la forme d'une collerette annulaire s'étendant radialement en saillie de l'ensemble du pourtour de l'entretoise 30. Il reste toutefois que la tête supérieure 32 peut présenter toute autre forme, potentiellement en saillie radialement autour du fût 31 de manière discontinue angulairement ou non.

Selon un mode de réalisation non limitatif, les éléments d'appui solidaires de l'entretoise 30 comprennent un joint supérieur d'étanchéité 33 en matière élastomère déformable solidaire de la tête supérieure 32 et agencé pour venir en appui contre le deuxième support 200 lorsque celui-ci est maintenu par les éléments d'appui solidaires de l'entretoise 30. Le joint supérieur d'étanchéité 33, globalement annulaire, présente par exemple une forme évasée, par exemple en incluant une paroi de forme tronconique, qui augmente de diamètre et qui s'ouvre en s'approchant du corps d'obturation 20.

Le joint supérieur d'étanchéité 33 peut être rendu solidaire de la tête supérieure 32 par une opération de surmoulage ou, alternativement, par une mise en place du joint supérieur d'étanchéité 33 par emboîtement sur la tête supérieure 32. Dans ce dernier cas, la tête supérieure 32 et le joint supérieur d'étanchéité 33 sont respectivement équipés de premiers éléments et de seconds éléments d'un même système d'emboitement dans lequel les premiers éléments et les seconds éléments peuvent occuper un état de non coopération entre eux où la fixation du joint supérieur d'étanchéité 33 sur la tête supérieure 32 n'est pas assurée et un état de coopération où les premiers éléments et les seconds éléments coopèrent entre eux par emboîtement respectif d'une manière assurant la fixation du joint supérieur d'étanchéité 33 sur la tête supérieure 32.

Pour que l'entretoise 30 joue un rôle d'entretoisement vis-à-vis du deuxième support 200 pour éviter un écrasement local et une éventuelle détérioration, la hauteur du fût 31 le long de l'axe principal X est supérieur ou égal à l'épaisseur 201 du deuxième support 200 au niveau de l'orifice 202. Le bord inférieur du joint supérieur d'étanchéité 33 est destiné à venir en appui contre le deuxième support 200 de manière étanche. Cette mise en appui étanche peut s'accompagner d'une compression du joint supérieur d'étanchéité 33 suivant l'axe principal X éventuellement concomitante à un rapprochement du bord inférieur du joint supérieur d'étanchéité 33 vers la tête supérieure 32.

L'étanchéité conférée par le joint supérieur d'étanchéité 33 s'entend à la fois d'une étanchéité aux fluides (que ce soit sous forme liquide ou gaz, en fonction de la nature des environnements E1, E2) susceptibles d'être présents à travers l'orifice 202 et d'une étanchéité sonore.

En complément, de manière importante, le dispositif d'assemblage 10 comprend un système de liaison 40 reliant mécaniquement le corps d'obturation 20 et l'entretoise 30. Le système de liaison 40 est configuré pour présenter une aptitude à se déformer élastiquement le long de l'axe principal X d'une manière conférant une liaison mécanique élastiquement déformable et amortissante entre le corps d'obturation 20 et l'entretoise 30 suivant l'axe principal X. Le système de liaison 40 est essentiellement configuré de sorte que la liaison mécanique qu'il confère est telle que, sous l'effet d'efforts extérieurs susceptibles d'être appliqués au dispositif d'assemblage 10 par le premier support 100 et par le deuxième support 200 respectivement au niveau du corps d'obturation 20 et de l'entretoise 30, le corps d'obturation 20 et l'entretoise 30 ont une aptitude à se rapprocher élastiquement l'un de l'autre suivant l'axe principal X tout en amortissant les vibrations mécaniques.

Le dispositif d'assemblage 10 permet de limiter considérablement les vibrations mécaniques entre le corps d'obturation 20 et l'entretoise 30, ce qui permet au final de limiter d'autant le transfert de vibrations mécaniques de l'environnement E1 délimité et isolé par les deux supports 100, 200 à l'autre environnement E2 délimité et isolé par les deux supports 100, 200.

Pour limiter la quantité de matière et l'encombrement du dispositif d'assemblage 10, il peut être avantageux de prévoir que la tête supérieure 32 soit agencée à une extrémité distale de l'entretoise 30. L'extrémité distale est l'extrémité opposée suivant l'axe principal X à une extrémité proximale de l'entretoise 30 qui correspond à l'extrémité tournée du côté du corps d'obturation 20 et directement reliée mécaniquement au système de liaison 40.

Dans un mode de réalisation particulier mais non limitatif, le corps d'obturation 20 comprend au moins une patte d'encliquetage 21 destinée à assurer une fixation par encliquetage entre le corps d'obturation 20 et le premier support 100. La combinaison de la fixation par encliquetage du premier support 100 au corps d'obturation 20 et du maintien du deuxième support 200 par appui par l'entretoise 30 permet d'assurer l'assemblage recherché des deux supports 100, 200.

Chacune des pattes d'encliquetage 21 comprend un ergot de retenue 22 destiné à venir automatiquement s'accrocher sur le contour de l'ouverture 102 formée dans le premier support 100 de manière à conférer l'état assurant la fixation par encliquetage entre le corps d'obturation 20 et le premier support 100. Cet accrochage de l'ergot de retenue 22 résulte automatiquement d'un mouvement d'insertion du corps d'obturation 20 dans l'ouverture 102 suivant une course d'insertion supérieure ou égale à une valeur prédéterminée. Tant que la course d'insertion du corps d'obturation 20 reste inférieure à la valeur prédéterminée, l'état assurant la fixation par encliquetage n'est pas occupé.

Comme cela est visible sur les figures, chaque patte d'encliquetage 21 se présente par exemple sous la forme d'une languette flexible avec une aptitude à se déformer transversalement à l'axe principal X. Chaque patte d'encliquetage 21 est reliée par son extrémité proximale au reste du corps d'obturation 20 à proximité de l'extrémité distale du corps d'obturation 20. L'extrémité distale du corps d'obturation 20 correspond à l'extrémité opposée, suivant l'axe principal X, à l'extrémité proximale du corps d'obturation 20 qui est tournée du côté de l'entretoise 30 et directement reliée mécaniquement au système de liaison 40. Chaque patte d'encliquetage 21 s'étend librement sensiblement parallèlement à l'axe principal X. L'ergot de retenue 22 est agencé à proximité de l'extrémité distale de la patte d'encliquetage 21 et est apte à venir en appui contre la face arrière du premier support 100, qui est la face opposée à la face avant du premier support 100 contre laquelle une tête inférieure 23 du corps d'obturation 20 vient en appui à l'issue de la course d'insertion supérieure ou égale à la valeur prédéterminée. L'aptitude de chaque patte d'encliquetage 21 à se déformer élastiquement résulte d'une aptitude de la patte d'encliquetage 21 à se déformer en flexion sur sa longueur et/ou d'une aptitude de la zone de raccordement de la patte d'encliquetage 21 au reste du corps d'obturation 20 à se déformer élastiquement en torsion. La distance comptée suivant l'axe principal X séparant le cran d'appui délimité par l'ergot de retenue 22 et la tête inférieure 23 est supérieure ou égale à l'épaisseur 101 locale du premier support 100.

Selon un mode de réalisation non limitatif, la tête inférieure 23 s'étend en saillie transversalement à l'axe principal X autour du reste du corps d'obturation 20. La tête inférieure 23 présente des dimensions extérieures, considérées dans le plan orthogonal P à l'axe principal X, supérieures aux dimensions de la section de l'ouverture 102 formée dans le premier support 100. La tête inférieure 23 est destinée à venir en appui contre le premier support 100 suivant l'axe principal X, au niveau de sa face avant précédemment évoquée, pour former une butée pour le premier support 100 le long de l'axe principal X dans un sens tendant à s'opposer à un rapprochement du premier support 100 vers l'entretoise 30 suivant l'axe principal X, et donc à s'opposer à un rapprochement du premier support 100 en direction du deuxième support 200 lui-même maintenu axialement par les éléments d'appui solidaires de l'entretoise 30.

Par exemple, pour conférer un appui efficace de la tête inférieure 23 sur le premier support 100 et une obturation efficace et étanche de l'ouverture 102 par le corps d'obturation 20 tout en facilitant la mise en place en limitant les risques de mauvais positionnement du dispositif d'assemblage 10, facilitant d'autant une mise en place intuitive et potentiellement en aveugle, la tête inférieure 23 peut se présenter sous la forme d'une collerette annulaire s'étendant radialement en saillie autour du corps d'obturation 20. Il reste toutefois que la tête inférieure 23 peut présenter toute autre forme, potentiellement en saillie radialement autour du corps d'obturation 20 de manière discontinue angulairement ou non.

Pour limiter la quantité de matière et l'encombrement du dispositif d'assemblage 10, il peut être avantageux de prévoir que la tête inférieure 23 soit agencée au niveau de l'extrémité proximale du corps d'obturation 20 suivant l'axe principal X.

Selon un mode de réalisation non limitatif, le dispositif d'assemblage 10 comprend un joint inférieur d'étanchéité 24 en matière élastomère déformable solidaire de la tête inférieure 23 et agencé pour venir en appui contre le premier support 100 lorsque le corps d'obturation 20 obture l'ouverture 102 formée dans le premier support 100, notamment lorsque le corps d'obturation 20 est fixé par encliquetage dans l'ouverture 102 du premier support 102.

Le joint inférieur d'étanchéité 24, globalement annulaire, présente par exemple une forme évasée, par exemple en incluant une paroi de forme tronconique, qui augmente de diamètre et qui s'ouvre en s'approchant de l'extrémité distale du corps d'obturation 20.

Le joint inférieur d'étanchéité 24 peut être rendu solidaire de la tête inférieure 23 par une opération de surmoulage ou, alternativement, par une mise en place du joint inférieur d'étanchéité 24 par emboîtement sur la tête inférieure 23. Dans ce dernier cas, la tête inférieure 23 et le joint inférieur d'étanchéité 24 sont respectivement équipés de premiers éléments et de seconds éléments d'un même système d'emboitement dans lequel les premiers éléments et les seconds éléments peuvent occuper un état de non coopération entre eux où la fixation du joint inférieur d'étanchéité 24 sur la tête inférieure 23 n'est pas assurée ou un état de coopération où les premiers éléments et les seconds éléments coopèrent entre eux par emboîtement respectif d'une manière assurant la fixation du joint inférieur d'étanchéité 24 sur la tête inférieure 23.

Le bord inférieur du joint inférieur d'étanchéité 24 est destiné à venir en appui contre le premier support 100 de manière étanche. Cette mise en appui étanche peut s'accompagner d'une compression du joint inférieur d'étanchéité 24 suivant l'axe principal X concomitante à un rapprochement du bord inférieur du joint inférieur d'étanchéité 24 vers la tête inférieure 23. Ce phénomène est schématisé sur la figure 2 qui montre que le joint inférieur d'étanchéité 24 présente une hauteur suivant l'axe principal X ayant une valeur inférieure à celle occupée par le joint inférieur d'étanchéité 24, par exemple sur la figure 1, lorsque celui-ci n'est pas soumis à une compression.

L'étanchéité conférée par le joint inférieur d'étanchéité 24 s'entend à la fois d'une étanchéité aux fluides (que ce soit sous forme liquide ou gaz, en fonction de la nature des environnements E1, E2) susceptibles d'être présents à travers l'ouverture 102 et d'une étanchéité sonore.

Selon un mode de réalisation non limitatif, le système de liaison 40 comprend une pluralité de liens 41 individuels distincts les uns des autres. Chaque lien 41 relie mécaniquement l'extrémité proximale du corps d'obturation 20 et l'extrémité proximale de l'entretoise 30. Chaque lien 41 est positionné dans une zone donnée du pourtour de l'entretoise 30, ce pourtour étant considéré dans le plan orthogonal P à l'axe principal X et dans une zone donnée du pourtour du corps d'obturation 20, ce pourtour étant considéré également dans le plan orthogonal P à l'axe principal X.

Chaque lien 41 est configuré, notamment par une adaptation de sa matière constitutive, de sa section de coupe le long de sa longueur et de la forme suivant laquelle il s'étend, de telle manière que tout ou partie de chaque lien 41 est déformable élastiquement au moins suivant l'axe principal X. Cette aptitude de déformation propre à chaque lien 41 et combinée pour l'ensemble des liens 41 présents permet de fournir un système de liaison 40 ayant les propriétés avantageuses précédemment décrites.

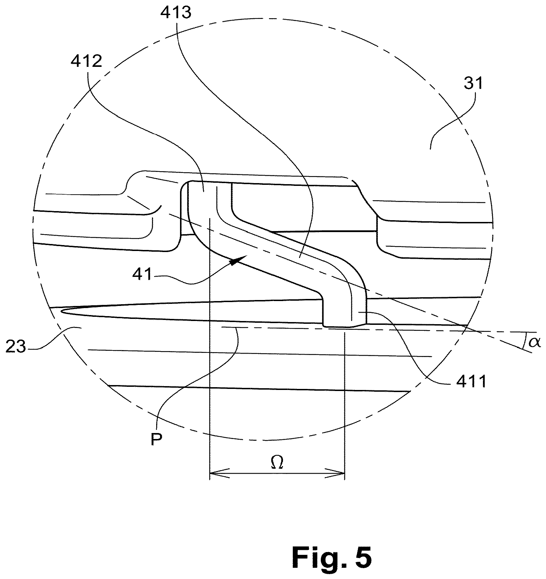

A cet effet, comme cela est détaillé sur la figure 5, chaque lien 41 est notamment constitué d'un tenon inférieur 411 raccordé mécaniquement au corps d'obturation 20, d'un tenon supérieur 412 raccordé mécaniquement à l'entretoise 30 et d'une branche de raccordement 413 reliant mécaniquement le tenon inférieur 411 et le tenon supérieur 412 entre eux. Le tenon inférieur 411 et le tenon supérieur 412 s'étendent chacun sensiblement parallèlement à l'axe principal X en présentant un décalage Ω l'un par rapport à l'autre transversalement à l'axe principal X. La branche de raccordement 413 est avantageusement inclinée par rapport au plan orthogonal P à l'axe principal X de sorte que l'angle α formé entre la branche de raccordement 413 et le plan orthogonal P est strictement différent de 0°.

La déformation élastique de chaque lien 41 suivant l'axe principal X est obtenue par la combinaison d'une capacité de la branche de raccordement 413 à se déformer élastiquement suivant sa longueur par flexion, d'une capacité de la zone de jonction entre la branche de raccordement 413 et le tenon supérieur 412 à se déformer élastiquement par torsion à la manière d'une articulation, et d'une capacité de la zone de jonction entre la branche de raccordement 413 et le tenon inférieur 411 à se déformer élastiquement par torsion à la manière d'une articulation

Selon un mode de réalisation non limitatif, l'angle α formé entre la branche de raccordement 413 et le plan orthogonal P à l'axe principal X est très avantageusement compris entre 10° et 25°, de préférence entre 15° et 20°. En effet, il a été déterminé par la Demanderesse, de manière empirique et par simulation numérique, que la présence d'un angle α ayant une telle valeur permet de conférer une très bonne aptitude de chaque lien 41 à se déformer élastiquement et permet au système de liaison 40 de jouer pleinement sa fonction générale d'amortissement de vibrations mécaniques telle que décrite précédemment. A titre d'exemple non limitatif, de la manière illustrée sur les figures, l'angle α est égal à 17°.

Pour garantir un fonctionnement fiable et efficace du système de liaison 40, il est notamment important de prévoir que le nombre de liens 41 soit supérieur ou égal à 2 et que les liens 41 soient répartis autour de l'axe principal X, le long des pourtours du corps d'obturation 20 et de l'entretoise 30, selon une répartition angulaire à intervalles réguliers ou non. Dans le cas où le nombre de liens 41 est pair, par exemple égal à 4 comme c'est le cas dans l'exemple particulier non limitatif des figures 1 à 5, les liens 41 peuvent alors être répartis par paires en prévoyant que les deux liens 41 d'une même paire soient disposés en regard l'un de l'autre suivant une direction radiale perpendiculaire à l'axe principal X.

Dans un mode de réalisation particulier non limitatif tel que représenté, le corps d'obturation 20, l'entretoise 30 et le système de liaison 40 sont formés dans une pièce unique monobloc, c'est-à-dire d'un seul tenant, typiquement obtenue dans une matière plastique, par exemple par des opérations de moulage. Il peut aussi s'agir d'une pièce métallique. Le joint supérieur d'étanchéité 33 et le joint inférieur d'étanchéité 24 peuvent être des pièces indépendantes de la pièce unique monobloc susmentionnée et rapportées à cette dernière de manière démontable ou à demeure, par exemple respectivement par un principe d'emboitement ou par un principe de surmoulage comme cela l'a déjà été expliqué.

## Revendications

1. Dispositif d'assemblage (10) destiné à assembler un premier support (100) et un deuxième support (200) entre eux dans une configuration où les supports (100, 200) sont superposés au moins localement, le dispositif d'assemblage (10) comprenant :
un corps d'obturation (20) s'étendant essentiellement selon un axe principal (X) et configuré de sorte à pouvoir venir se fixer dans une ouverture (102) formée dans le premier support (100) tout en l'obturant, par insertion de tout ou partie du corps d'obturation (20) dans l'ouverture (102) sensiblement parallèlement à l'axe principal (X),
une entretoise (30) décalée par rapport au corps d'obturation (20) suivant l'axe principal (X), destinée à traverser l'épaisseur (201) du deuxième support (200) et comprenant des éléments d'appui destinés à venir en appui contre le deuxième support (200) suivant l'axe principal (X) du côté opposé au corps d'obturation (20) pour maintenir en position le deuxième support (200) dans ladite configuration où le premier support (100) et le deuxième support (200) sont situés l'un au-dessus de l'autre suivant l'axe principal (X) au moins au niveau du dispositif d'assemblage (10),
et un système de liaison (40) reliant mécaniquement le corps d'obturation (20) et l'entretoise (30) et ayant une aptitude à se déformer élastiquement le long de l'axe principal (X) d'une manière conférant une liaison mécanique élastiquement déformable et amortissante entre le corps d'obturation (20) et l'entretoise (30) suivant l'axe principal (X) telle que, sous l'effet d'efforts extérieurs susceptibles d'être appliqués au dispositif d'assemblage (10) par le premier support (100) et par le deuxième support (200) respectivement au niveau du corps d'obturation (20) et de l'entretoise (30), le corps d'obturation (20) et l'entretoise (30) ont une aptitude à se rapprocher élastiquement l'un de l'autre suivant l'axe principal (X) en jouant un rôle d'amortisseur de vibrations mécaniques,
le système de liaison (40) comprend une pluralité de liens (41) individuels distincts les uns des autres, où chaque lien (41) relie mécaniquement le corps d'obturation (20) et l'entretoise (30) et où tout ou partie de chaque lien (41) est déformable élastiquement au moins suivant l'axe principal (X),
**caractérisé en ce que**
chaque lien (41) étant constitué d'une part d'un tenon inférieur (411) et d'un tenon supérieur (412) respectivement raccordés mécaniquement au corps d'obturation (20) et à l'entretoise (30) et s'étendant chacun sensiblement parallèlement à l'axe principal (X) en présentant un décalage (Ω) l'un par rapport à l'autre transversalement à l'axe principal (X), d'autre part d'une branche de raccordement (413) reliant mécaniquement le tenon inférieur (411) et le tenon supérieur (412) entre eux et étant inclinée par rapport au plan orthogonal (P) à l'axe principal (X) de sorte à former un angle (α) non nul.

2. Dispositif d'assemblage (10) selon la revendication 1, **caractérisé en ce que** pour chaque lien (41) du système de liaison (40), l'angle (α) formé entre la branche de raccordement (413) et le plan orthogonal (P) à l'axe principal (X) est compris entre 10° et 25°, de préférence entre 15° et 20°.

3. Dispositif d'assemblage (10) selon l'une quelconque des revendications 1 ou 2, **caractérisé en ce que** le nombre de liens (41) est supérieur ou égal à 2 et les liens (41) sont répartis autour de l'axe principal (X), chaque lien (41) étant positionné dans une zone donnée du pourtour de l'entretoise (30) vu dans le plan orthogonal (P) à l'axe principal (X) et dans une zone donnée du pourtour du corps d'obturation (20) vu dans le plan orthogonal (P) à l'axe principal (X).

4. Dispositif d'assemblage (10) selon l'une quelconque des revendications 1 à 3, **caractérisé en ce que** le corps d'obturation (20) comprend au moins une patte d'encliquetage (21) destinée à assurer une fixation par encliquetage entre le corps d'obturation (20) et le premier support (100) et **en ce que** ladite au moins une patte d'encliquetage (21) comprend un ergot de retenue (22) destiné à venir automatiquement s'accrocher sur le contour de l'ouverture (102) formée dans le premier support (100) de manière à conférer l'état assurant la fixation par encliquetage entre le corps d'obturation (20) et le premier support (100), cet accrochage de l'ergot de retenue (22) résultant automatiquement d'un mouvement d'insertion du corps d'obturation (20) dans l'ouverture (102) suivant une course d'insertion supérieure ou égale à une valeur prédéterminée en dessous de laquelle ledit état n'est pas obtenu.

5. Dispositif d'assemblage (10) selon l'une quelconque des revendications 1 à 4, **caractérisé en ce que** le corps d'obturation (20) comprend une tête inférieure (23) venant en saillie transversalement à l'axe principal (X) autour du reste du corps d'obturation (20) et présentant des dimensions extérieures, vues dans un plan orthogonal (P) à l'axe principal (X), supérieures aux dimensions de la section de l'ouverture (102) formée dans le premier support (100), la tête inférieure (23) étant destinée à venir en appui contre le premier support (100) suivant l'axe principal (X) pour former une butée pour le premier support (100) le long de l'axe principal (X) dans un sens tendant à s'opposer à un rapprochement du premier support (100) vers l'entretoise (30) suivant l'axe principal (X).

6. Dispositif d'assemblage (10) selon la revendication 5, **caractérisé en ce qu'**il comprend un joint inférieur d'étanchéité (24) en matière élastomère déformable solidaire de la tête inférieure (23) et agencé pour venir en appui contre le premier support (100) lorsque le corps d'obturation (20) obture l'ouverture (102) formée dans le premier support (100).

7. Dispositif d'assemblage (10) selon l'une des revendications 1 à 6, **caractérisé en ce que** l'entretoise (30) comprend un fût (31) s'étendant suivant l'axe principal (X), destiné à être à être inséré dans un orifice (202) formé dans le deuxième support (200) par un déplacement du fût (31) sensiblement parallèlement à l'axe principal (X) jusqu'à traverser toute l'épaisseur (201) du deuxième support (200) et **en ce que** les éléments d'appui comprennent une tête supérieure (32) venant en saillie transversalement à l'axe principal (X) autour du fût (31) et présentant des dimensions extérieures, vues dans un plan orthogonal (P) à l'axe principal (X), supérieures aux dimensions de la section de l'orifice (202) formé dans le deuxième support (200).

8. Dispositif d'assemblage (10) selon la revendication 7, **caractérisé en ce que** les éléments d'appui solidaires de l'entretoise (30) comprennent un joint supérieur d'étanchéité (33) en matière élastomère déformable solidaire de la tête supérieure (32) et agencé pour venir en appui contre le deuxième support (200) lorsque le deuxième support (200) est maintenu par les éléments d'appui solidaires de l'entretoise (30).

9. Dispositif d'assemblage (10) selon l'une quelconque des revendications 1 à 8, **caractérisé en ce que** le corps d'obturation (20), l'entretoise (30) et le système de liaison (40) sont formés dans une pièce unique monobloc.

## Patentansprüche

1. Vorrichtung zum Zusammenbau (10), die dazu bestimmt ist, eine erste Halterung (100) und eine zweite Halterung (200) in einer Konfiguration miteinander zusammenzubauen, in der die Halterungen (100, 200) mindestens lokal übereinander liegen, wobei die Vorrichtung zum Zusammenbau (10) Folgendes umfasst:
einen Verschlusskörper (20), der sich insbesondere entlang einer Hauptachse (X) erstreckt, und derart konfiguriert ist, um in einer Öffnung (102) fixiert werden zu können, die in der ersten Halterung (100) gebildet wird, und diese dabei durch Einführen des gesamten Verschlusskörpers (20) oder eines Teils davon in die Öffnung (102) im Wesentlichen parallel zur Hauptachse (X) verschließt,
einen in Bezug auf den Verschlusskörper (20) entlang der Hauptachse (X) versetzten Abstandhalter (30), der dazu bestimmt ist, die zweite Halterung (200) in ihrer Dicke (201) zu durchqueren, und Stützelemente umfasst, die dazu bestimmt sind, sich entlang der Hauptachse (X) an der Seite gegenüber dem Verschlusskörper (20) an der zweiten Halterung (200) abzustützen, um die zweite Halterung (200) in der Konfiguration in Position zu halten, in der sich die erste Halterung (100) und die zweite Halterung (200) entlang der Hauptachse (X) mindestens im Bereich der Vorrichtung zum Zusammenbau (10) übereinander befinden,
und ein Verbindungssystem (40), das den Verschlusskörper (20) und den Abstandhalter (30) mechanisch verbindet, und eine Fähigkeit aufweist, sich entlang der Hauptachse (X) auf eine Art und Weise elastisch zu verformen, die eine elastisch verformbare und dämpfende mechanische Verbindung zwischen dem Verschlusskörper (20) und dem Abstandhalter (30) entlang der Hauptachse (X) verleiht, sodass der Verschlusskörper (20) und der Abstandhalter (30) unter der Wirkung von externen Kräften, die jeweils durch die erste Halterung (100) und die zweite Halterung (200) im Bereich des Verschlusskörpers (20) und des Abstandhalters (30) an die Vorrichtung zum Zusammenbau (10) angelegt werden können, eine Fähigkeit aufweisen, sich elastisch entlang der Hauptachse (X) einander anzunähern, und dabei als Dämpfer für mechanische Schwingungen fungieren,
wobei das Verbindungssystem (40) eine Vielzahl von Einzelverbindungen (41) umfasst, die sich voneinander unterscheiden, wobei jede Verbindung (41) den Verschlusskörper (20) und den Abstandhalter (30) mechanisch verbindet, und wobei die Gesamtheit oder ein Teil einer jeden Verbindung (41) mindestens entlang der Hauptachse (X) elastisch verformbar ist,
**dadurch gekennzeichnet, dass** jede Verbindung (41) einerseits aus einem unteren Zapfen (411) und einem oberen Zapfen (412), die jeweils mechanisch an den Verschlusskörper (20) und an den Abstandhalter (30) angeschlossen sind, und sich jeweils im Wesentlichen parallel zur Hauptachse (X) erstrecken, und dabei einen Versatz (Ω) in Bezug zueinander quer zur Hauptachse (X) aufweisen, und andererseits aus einem Anschlusszweig (413) besteht, der den unteren Zapfen (411) und den oberen Zapfen (412) mechanisch miteinander verbindet, und in Bezug auf die zur Hauptachse (X) orthogonale Ebene (P) derart geneigt ist, um einen Winkel (*α*) ungleich null zu bilden.

2. Vorrichtung zum Zusammenbau (10) nach Anspruch 1, **dadurch gekennzeichnet, dass** der Winkel (*α*), der zwischen dem Anschlusszweig (413) und der zur Hauptachse (X) orthogonalen Ebene (P) gebildet wird, für jede Verbindung (41) des Verbindungssystems (40) zwischen 10° und 25°, vorzugsweise zwischen 15° und 20° liegt.

3. Vorrichtung zum Zusammenbau (10) nach einem der Ansprüche 1 oder 2, **dadurch gekennzeichnet, dass** die Anzahl an Verbindungen (41) größer oder gleich 2 ist, und die Verbindungen (41) um die Hauptachse (X) herum verteilt sind, wobei jede Verbindung (41) in einer gegebenen Zone des Umfangs des Abstandhalters (30), in der zur Hauptachse (X) orthogonalen Ebene (P) gesehen, und in einer gegebenen Zone des Verschlusskörpers (20), in der zur Hauptachse (X) orthogonalen Ebene (P) gesehen, positioniert ist.

4. Vorrichtung zum Zusammenbau (10) nach einem der Ansprüche 1 bis 3, **dadurch gekennzeichnet, dass** der Verschlusskörper (20) mindestens eine Einrastlasche (21) umfasst, die dazu bestimmt ist, für eine Fixierung durch Einrasten zwischen dem Verschlusskörper (20) und der ersten Halterung (100) zu sorgen, und dadurch, dass die mindestens eine Einrastlasche (21) eine Rückhalteklaue (22) umfasst, die dazu bestimmt ist, sich automatisch in die Kontur der Öffnung (102), die in der ersten Halterung (100) gebildet ist, einzuhaken, um den Zustand zu verleihen, der für die Fixierung durch Einrasten zwischen dem Verschlusskörper (20) und der ersten Halterung (100) sorgt, wobei sich dieses Einhaken der Rückhalteklaue (22) automatisch aus einer Einführbewegung des Verschlusskörpers (20) in die Öffnung (102) entlang eines Einführungsweges ergibt, der größer oder gleich einem vorbestimmten Wert ist, unter dem der Zustand nicht erhalten wird.

5. Vorrichtung zum Zusammenbau (10) nach einem der Ansprüche 1 bis 4, **dadurch gekennzeichnet, dass** der Verschlusskörper (20) einen unteren Kopf (23) umfasst, der quer zur Hauptachse (X) um den Rest des Verschlusskörpers (20) herum abstehend ist, und Außenabmessungen aufweist, die in einer zur Hauptachse (X) orthogonalen Ebene (P) gesehen größer als die Abmessungen des Querschnitts der Öffnung (102) sind, die in der ersten Halterung (100) gebildet wird, wobei der untere Kopf (23) dazu bestimmt ist, um sich entlang der Hauptachse (X) an der ersten Halterung (100) abzustützen, um einen Anschlag für die erste Halterung (100) entlang der Hauptachse (X) in einer Richtung zu bilden, die dazu tendiert, sich einer Annäherung der ersten Halterung (100) zum Abstandhalter (30) entlang der Hauptachse (X) entgegenzustellen.

6. Vorrichtung zum Zusammenbau (10) nach Anspruch 5, **dadurch gekennzeichnet, dass** sie einen unteren Dichtring (24) aus verformbarem Elastomer-Material umfasst, der fest mit dem unteren Kopf (23) verbunden und angeordnet ist, um sich an der ersten Halterung (100) abzustützen, wenn der Verschlusskörper (20) die Öffnung (102), die in der ersten Halterung (100) gebildet wird, verschließt.

7. Vorrichtung zum Zusammenbau (10) nach einem der Ansprüche 1 bis 6, **dadurch gekennzeichnet, dass** der Abstandhalter (30) einen Schaft (31) umfasst, der sich entlang der Hauptachse (X) erstreckt, der dazu bestimmt ist, in ein Loch (202), das in der zweiten Halterung (200) gebildet wird, durch eine Bewegung des Schaftes (31) im Wesentlichen parallel zur Hauptachse (X) eingeführt zu werden, bis die gesamte Dicke (201) der zweiten Halterung (200) durchquert ist, und dadurch, dass die Stützelemente einen oberen Kopf (32) umfassen, der quer zur Hauptachse (X) um den Schaft (31) herum abstehend ist, und Außenabmessungen aufweist, die in einer zur Hauptachse (X) orthogonalen Ebene (P) gesehen größer als die Abmessungen des Querschnitts des Loches (202) sind, das in der zweiten Halterung (200) gebildet wird.

8. Vorrichtung zum Zusammenbau (10) nach Anspruch 7, **dadurch gekennzeichnet, dass** die fest mit dem Abstandhalter (30) verbundenen Stützelemente einen oberen Dichtring (33) aus verformbarem Elastomer-Material umfassen, der fest mit dem oberen Kopf (32) verbunden und angeordnet ist, um sich an der zweiten Halterung (200) abzustützen, wenn die zweite Halterung (200) durch die fest mit dem Abstandhalter (30) verbundenen Stützelemente festgehalten wird.

9. Vorrichtung zum Zusammenbau (10) nach einem der Ansprüche 1 bis 8, **dadurch gekennzeichnet, dass** der Verschlusskörper (20), der Abstandhalter (30) und das Verbindungssystem (40) aus einem einzigen Teil in einem Stück gebildet werden.

## Claims

1. An assembly device (10) intended to assemble a first support (100) and a second support (200) together in a configuration where the supports (100, 200) are at least locally superimposed, the assembly device (10) comprising:
a closure body (20) extending essentially along a main axis (X) and configured so that it can be fastened in an opening (102) formed in the first support (100) while closing it, by insertion of all or part of the closure body (20) into the opening (102) substantially parallel to the main axis (X),
a spacer (30) offset relative to the closure body (20) along the main axis (X), intended to pass through the thickness (201) of the second support (200) and comprising bearing elements intended to bear against the second support (200) along the main axis (X) on the side opposite to the closure body (20) to maintain in position the second support (200) in said configuration where the first support (100) and the second support (200) are located one above the other along the main axis (X) at least at the assembly device (10),
and a linking system (40) mechanically linking the closure body (20) and the spacer (30) and having an ability to elastically deform along the main axis (X) in a manner conferring an elastically deformable and damping mechanical linkage between the closure body (20) and the spacer (30) along the main axis (X) such that, under the effect of external forces likely to be applied to the assembly device (10) by the first support (100) and by the second support (200) respectively at the closure body (20) and the spacer (30), the closure body (20) and the spacer (30) have an ability to elastically get closer to each other along the main axis (X) by acting as a mechanical vibration damper.
the linking system (40) comprises a plurality of individual links (41) distinct from one another, where each link (41) mechanically links the closure body (20) and the spacer (30) and where all or part of each link (41) is elastically deformable at least along the main axis (X),
**characterized in that**
each link (41) being constituted, on the one hand, by a lower pin (411) and an upper pin (412) respectively mechanically connected to the closure body (20) and to the spacer (30) and each extending substantially parallel to the main axis (X) while having an offset (Ω) relative to one another transversely to the main axis (X), on the other hand, by a connecting branch (413) mechanically linking the lower pin (411) and the upper pin (412) together and being inclined relative to the plane (P) orthogonal to the main axis (X) so as to form a non-zero angle (*α*).

2. The assembly device (10) according to claim 1, **characterized in that** for each link (41) of the linking system (40), the angle (α) formed between the connecting branch (413) and the plane (P) orthogonal to the main axis (X) is comprised between 10° and 25°, preferably between 15° and 20°.

3. The assembly device (10) according to any one of claims 1 or 2, **characterized in that** the number of links (41) is greater than or equal to 2 and the links (41) are distributed about the main axis (X), each link (41) being positioned in a given area of the circumference of the spacer (30) seen in the plane (P) orthogonal to the main axis (X) and in a given area of the circumference of the closure body (20) seen in the plane (P) orthogonal to the main axis (X).

4. The assembly device (10) according to any one of claims 1 to 3, **characterized in that** the closure body (20) comprises at least one snap-fitting tab (21) intended to ensure a snap-fastening between the closure body (20) and the first support (100) and **in that** said at least one snap-fitting tab (21) comprises a retaining lug (22) intended to automatically engage the contour of the opening (102) formed in the first support (100) so as to confer the state ensuring the snap-fastening between the closure body (20) and the first support (100), this engagement of the retaining lug (22) automatically resulting from a movement of insertion of the closure body (20) into the opening (102) along an insertion stroke greater than or equal to a predetermined value below which said state is not obtained.

5. The assembly device (10) according to any one of claims 1 to 4, **characterized in that** the closure body (20) comprises a lower head (23) projecting transversely to the main axis (X) about the remainder of the closure body (20) and having external dimensions, seen in a plane (P) orthogonal to the main axis (X), greater than the dimensions of the section of the opening (102) formed in the first support (100), the lower head (23) being intended to bear against the first support (100) along the main axis (X) to form an abutment for the first support (100) along the main axis (X) in a direction tending to oppose an approach of the first support (100) towards the spacer (30) along the main axis (X).

6. The assembly device (10) according to claim 5, **characterized in that** it comprises a lower seal (24) made of a deformable elastomeric material secured to the lower head (23) and arranged to bear against the first support (100) when the closure body (20) closes the opening (102) formed in the first support (100).

7. The assembly device (10) according to any of claims 1 to 6, **characterized in that** the spacer (30) comprises a shaft (31) extending along the main axis (X), intended to be inserted into an orifice (202) formed in the second support (200) by a displacement of the shaft (31) substantially parallel to the main axis (X) until it passes through the entire thickness (201) of the second support (200) and **in that** the bearing elements comprise an upper head (32) projecting transversely to the main axis (X) about the shaft (31) and having external dimensions, seen in a plane (P) orthogonal at the main axis (X), greater than the dimensions of the section of the orifice (202) formed in the second support (200).

8. The assembly device (10) according to claim 7, **characterized in that** the bearing elements secured to the spacer (30) comprise an upper seal (33) made of a deformable elastomeric material secured to the upper head (32) and arranged to bear against the second support (200) when the second support (200) is maintained by the bearing elements secured to the spacer (30).

9. The assembly device (10) according to any one of claims 1 to 8, **characterized in that** the closure body (20), the spacer (30) and the linking system (40) are formed in a single unitary part.
